# FASCICULE DE BREVET EUROPEEN

(11) **EP 4 222 024 B1**
(45) Date de publication et mention de la délivrance du brevet: **12.06.2024**
(21) Numéro de dépôt: 21786528.6
(22) Date de dépôt: 20.09.2021
(51) Int. Cl.: B60R 11/02, B60R 11/00

(54) **ENSEMBLE POUR LA FIXATION D'UN APPAREIL ÉLECTRONIQUE PORTATIF DANS UN VÉHICULE AUTOMOBILE**
ANORDNUNG ZUR BEFESTIGUNG EINES TRAGBAREN ELEKTRONISCHEN GERÄTS IN EINEM KRAFTFAHRZEUG
ASSEMBLY FOR ATTACHING A PORTABLE ELECTRONIC DEVICE IN A MOTOR VEHICLE

(30) Priorité: 30.09.2020 FR 2009945
(43) Date de publication de la demande: 09.08.2023
(73) Titulaire: Stellantis Auto SAS, 78300 Poissy (FR)
(72) Inventeur: LE FLOCH, Frederic, 78000 VERSAILLES (FR)
(86) Numéro de dépôt international: PCT/FR2021/051599
(87) Numéro de publication internationale: WO 2022/069813

(56) Documents cités:
- DE-A1- 19 624 525
- FR-A1- 2 917 354
- US-A1- 2014 209 648

## Description

### DOMAINE DE L'INVENTION

La présente invention concerne un ensemble de support pour un appareil électronique portatif avec un écran d'affichage. La présente invention concerne également un ensemble de support destiné à être utilisé dans un véhicule automobile, l'ensemble de support comprenant des moyens de fixation permettant sa fixation et son démontage à des équipements de l'intérieur du véhicule comme par exemple des sièges ou la planche de bord. La présente invention concerne aussi un véhicule comprenant un ensemble de support selon l'invention.

### ETAT DE L'ART

L'utilisation d'appareils électroniques portatifs, comme par exemple des tablettes numériques et/ou des smartphones, est aujourd'hui généralisée. Dès lors, il est intéressant que ces appareils puissent être utilisés avec sécurité et de manière confortable dans un véhicule automobile, notamment pour le passager avant du véhicule, mais aussi dans d'autres environnements que celui du véhicule. De nombreux modèles d'appareils électroniques portatifs existent, de formes rectangulaires, mais dont les dimensions de longueur, de largeur, et d'épaisseur sont très différentes selon les modèles. Il est donc nécessaire de pourvoir utiliser des ensembles de support d'appareils électroniques portatifs qui puissent s'adapter aux différentes dimensions de ces appareils.

Les documents US20140209648 et DE19624525 décrivent des supports pour des appareils électroniques portatifs, la divulgation du document US20140209648 correspondant au préambule de la revendication 1.

Le document FR2917354 décrit un dispositif apte à supporter et maintenir en position de lisibilité un appareil électronique portatif à l'intérieur d'un habitacle de véhicule automobile. Ledit dispositif comporte un mécanisme permettant de serrer l'appareil électronique portatif et de le maintenir en position de visibilité. Le mécanisme de serrage et de maintien permet la fixation d'appareils de différentes dimensions. Cependant le mécanisme en question comporte de nombreuses pièces comme des engrenages et/ou bras de coulissement et/ou des éléments de rappel élastique complexes à fabriquer et à assembler. De plus la praticité d'utilisation parfois difficile et la fiabilité du serrage peuvent être à l'origine de chutes des appareils électroniques portatifs.

La présente invention a pour objet d'améliorer la situation antérieure à savoir de proposer un ensemble pour la fixation d'un appareil électronique portatif qui permette la fixation en position de visibilité d'un appareil électronique portatif en toute sécurité et qui soit simple à réaliser, simple à utiliser et peu coûteux à fabriquer, et qui soit compatible de différentes dimensions d'appareils portatifs.

L'invention a aussi pour objet de proposer un ensemble qui permette la fixation en position de visibilité d'un appareil électronique portatif dans un véhicule automobile mais aussi dans d'autres environnement.

La présente invention concerne aussi un véhicule comprenant un tel élément de support.

### BREVE DESCRIPTION DE L'INVENTION

L'invention concerne un ensemble de support destiné à recevoir un appareil électronique portatif avec un écran, ledit ensemble comprenant : un boîtier comprenant une cavité, une paroi avec une ouverture de visibilité, de sorte à voir permettre à un utilisateur de voir l'écran, ledit ensemble étant remarquable en ce que l'ensemble de support comprend une cale d'adaptation amovible par rapport au boîtier, et destinée à s'insérer au sein de la cavité, de sorte à définir un réceptacle à l'intérieur de la cavité, de volume inférieur à celui de la cavité, lorsque ladite cale d'adaptation est insérée dans la cavité.

La cale d'adaptation comprend une cale primaire comportant une base en forme de plaque rectangulaire ayant un rebord ayant une épaisseur H par rapport à la base, ledit rebord s'étendant le long de trois des côtés de la base, ledit rebord formant ainsi formant trois rebords intérieurs orientés vers l'intérieur de la base.

La cale d'adaptation comprend en outre une cale intermédiaire formant une plaque en forme de U ou une plaque rectangulaire, agencée de sorte à s'étendre-sur la base de la cale primaire avec les bords extérieurs du U ou du rectangle de la cale intermédiaire au contact avec les trois bords intérieurs du rebord de la cale primaire.

La cale d'adaptation comporte une cale secondaire formant une plaque en forme de U, s'étendant sur la cale intermédiaire 3, au contact avec les trois bords intérieurs du rebord de la cale primaire.

La cale d'adaptation comprend une cale tertiaire formant une plaque en forme de L, s'étendant sur la cale primaire ou sur la cale intermédiaire et dont les bords extérieurs, des branches du L, situés du côté de l'angle obtus du L, sont au contact de deux des bords consécutifs intérieurs du U formé par la cale secondaire.

Ainsi avantageusement la cale d'adaptation permet de réduire les dimensions du réceptacle d'accueil au sein de la cavité du boîtier de façon à que les dimensions du réceptacle d'accueil ainsi constitué soient adaptées aux dimensions de l'appareil électronique portatif, lorsque ledit appareil est de dimensions inférieurs à celles de la cavité.

La cale d'adaptation comprenant une cale primaire permet de restreindre les dimensions du réceptacle d'accueil de la cavité en fonction de l'épaisseur de la cale primaire et des dimensions du rebord sur ses trois côtés.

Ainsi la cale d'adaptation comporte des moyens qui permettent de modifier son épaisseur, changeant ainsi la dimension d'épaisseur disponible du réceptacle d'accueil au sein de la cavité.

Ainsi de par la présence de la cale primaire, et/ou de la cale intermédiaire, et/ou de la cale secondaire, et/ou de la cale tertiaire les dimensions du réceptacle d'accueil au sein de la cavité sont adaptées pour correspondre à la longueur de l'appareil à accueillir, à son épaisseur, et à sa largeur et à le centrer au sein de la cavité, de façon à la maintenir et à faire correspondre l'écran avec l'ouverture de visibilité.

Selon l'invention, le boîtier comprend une ouverture latérale, sur un des bords latéraux du boîtier perpendiculaire à la paroi comprenant l'ouverture de visibilité, donnant accès à la cavité, et une paroi apte à obturer ladite ouverture latérale, ladite paroi étant mobile de sorte à laisser libre l'accès à la cavité.

Ainsi on peut insérer par ladite ouverture latérale la cale d'adaptation et l'appareil.

Dans un mode particulier de l'invention le boîtier comprend une butée, et la cale d'adaptation comprend une découpe apte à coopérer avec la butée de façon à empêcher le glissement de la cale d'adaptation hors de la cavité une fois la cale d'adaptation insérée dans la cavité.

Dans un mode particulier de l'invention, la cale secondaire, la cale tertiaire, la cale intermédiaire, la cale primaire sont réalisés en matériau de type mousse.

Ainsi les différentes cales, de par le matériau mousse, sont aptes à amortir les vibrations et ou les chocs, et à permettre une insertion d'un appareil sans jeu du fait de la compression possible de la mousse au sein du réceptacle d'accueil définis par lesdites cales.

L'invention concerne aussi un véhicule comprenant un ensemble de support selon l'invention, lequel ensemble comprend une paroi opposée à la paroi avec l'ouverture de visibilité, ladite paroi opposée comprenant une interface de fixation, ledit véhicule comprenant un moyen de fixation apte à coopérer avec l'interface de fixation dudit ensemble.

L'invention concerne aussi un véhicule comprenant une planche de bord, un ensemble de support selon l'une des revendications précédentes, et un moyen de fixation à la planche de bord apte à coopérer avec l'interface de fixation dudit ensemble de support.

### DESCRIPTION DETAILLEE

L'invention sera bien comprise et d'autres aspects et avantages apparaîtront clairement à la lecture de la description qui suit donnée en référence à la planche de dessins annexée sur laquelle :
- [Fig.1] est vue en perspective d'un ensemble de support 100 selon l'invention.
- [Fig.2] est vue de la cale primaire 5.
- [Fig.3] est vue d'une variante d'une cale primaire 6.
- [Fig.4] est une vue en « éclaté » de la cale primaire 5, de la cale intermédiaire 3, 4, de la cale secondaire 1et de la cale tertiaire 2.
- [Fig.5] est une vue de la paroi de fermeture 75 de l'ouverture latérale 74 du boîtier 7, et d'une cale d'adaptation 10 en vis-à-vis de l'ouverture latérale 74.
- [Fig.6] est une vue en d'un appareil électronique portatif 99 inséré dans la cale d'adaptation 10.
- [Fig.7] est une vue en section de la cavité d'un boîtier 7 avec une cale d'adaptation 10 et un appareil électronique portatif inséré au sein de la cavité du boîtier.

Dans la description qui suit, le terme « comprendre » est synonyme de « inclure » et n'est pas limitatif en ce qu'il autorise la présence d'autres éléments ou moyens dans la coque d'un appareil électronique portatif, le dispositif de support d'une telle coque ou l'ensemble de fixation d'un appareil électronique portatif auquel il se rapporte. Il est entendu que le terme « comprendre » inclut les termes « consister en ». Sur les différentes figures, les mêmes références désignent des éléments identiques ou similaires.

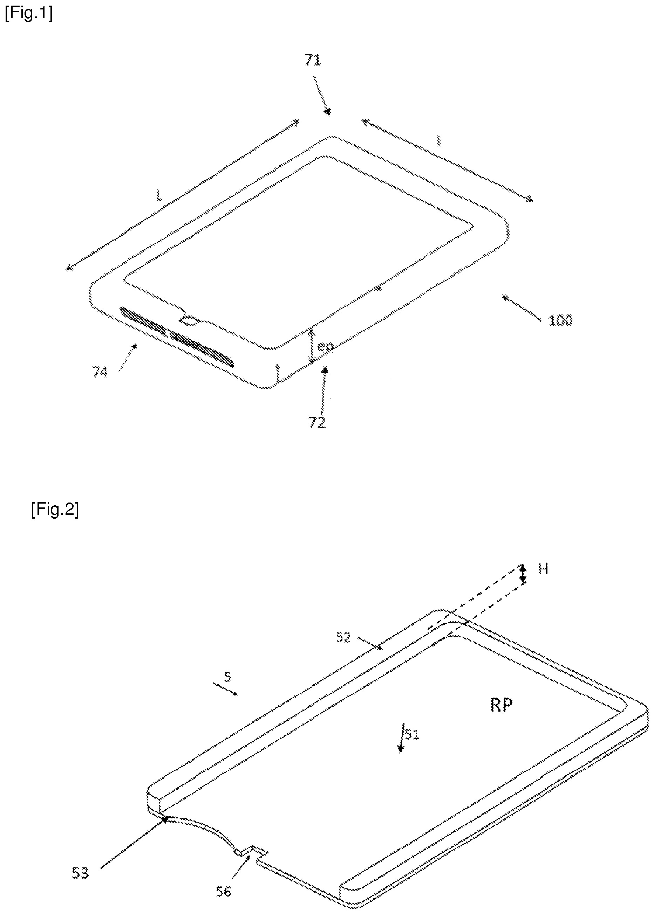

La figure 1 montre une vue générale d'un ensemble 100 de support pour appareil électronique portatif 99. Un tel ensemble est destiné à un usage dans un véhicule automobile et aussi dans tout autre environnement transport ou bien à la maison ou dans tout autre usage domestique.

L'ensemble 100 comporte un boîtier 7. Ce boîtier 7 comporte une paroi dite avant 71 avec une ouverture de visibilité et comporte une paroi dite arrière 72 opposée à la paroi de visibilité 71.

Le boîtier 7 a sensiblement la forme d'une boite rectangulaire dans laquelle la longueur et largeur des parois avant ou arrière sont nettement supérieures à distance entre la paroi avant et la paroi arrière, se situant par exemple dans un rapport de 10 à 50 voire de 50 à 100. Les angles du boîtier possèdent en variante des formes arrondies type « coin de valise ». Comme représenté figure 1, la longueur du boîtier L est définie comme la dimension allant de l'ouverture latérale 74 du boîtier au côté opposé. L'épaisseur ep est définie comme la dimension allant de la paroi arrière du boîtier vers la paroi avant du boîtier. La dimension de largeur l est perpendiculaire aux deux autre dimensions de longueur L et d'épaisseur ep.

L'ensemble 100 de support est destiné à recevoir un appareil électronique portatif 99 avec un écran. Ledit ensemble comprend un boîtier 7 comprenant une cavité, une paroi 71 avec ouverture de visibilité, de sorte à voir l'écran, une paroi opposée 72 à la paroi avec l'ouverture de visibilité comprenant une interface de fixation 73, et est remarquable en ce que l'ensemble de support comprend une cale d'adaptation 10 amovible par rapport au boîtier, destinée à s'insérer au sein de la cavité, de sorte à définir un réceptacle à l'intérieur de la cavité, de volume inférieur à celui de la cavité, lorsque ladite cale d'adaptation 10 est insérée dans la cavité.

Le boîtier 7 comprend en outre une ouverture latérale 74 situé sur un côté du boîtier perpendiculaire aux parois avant et arrière. La longueur du boîtier L est définie comme la dimension allant de l'ouverture du boîtier au côté opposé. L'épaisseur ep est définie comme la dimension allant de la paroi arrière du boîtier vers la paroi avant du boîtier. La dimension de largeur l est perpendiculaire aux deux autre dimensions de longueur et d'épaisseur.

La cavité au sein du boîtier 7 est destinée à recevoir des appareils comme des téléphones portatifs, ou des tablettes. De nombreux modèles de tels appareils électroniques portatifs existent, aux dimensions assez différentes selon les modèles. La cale d'adaptation 10 en définissant un réceptacle à l'intérieur de ladite cavité définit un volume inférieur à celui de la cavité. Les dimensions du réceptacle définies par la cale d'adaptation sont choisies de sorte à ce qu'un appareil électronique portatif soit maintenu dans le réceptacle sans jeu.

Une cale d'adaptation 10 est destinée à être insérée dans la cavité 7. La cale d'adaptation est définie de façon modulaire permettant de créer différentes dimensions du réceptacle intérieur à la cavité en fonction des appareils électroniques portatifs à accueillir.

La cavité est apte à recevoir postérieurement ou simultanément à l'insertion de la cale d'adaptation 10 au sein de la cavité 7, un appareil électronique portatif 99.

Dans une variante de l'invention, le boîtier 7 comporte en paroi arrière, dans le cas d'un usage au sein d'un véhicule une interface 73 pour la fixation à des moyens de fixation à des équipements de l'habitacle du véhicule. Dans une variante particulière la fixation de l'ensemble de support 100 est réalisé à une planche de bord du véhicule par des moyens de fixation reliant l'interface de fixation 73 à une partie de la planche de bord.

La figure 2 représente une cale primaire 5 selon l'invention. La cale primaire 5 comporte une base en forme de plaque rectangulaire 51 ayant quatre côtés, et un rebord 52. Le rebord 52 s'étend en périphérie de la base 51 perpendiculairement à la base avec une épaisseur H par rapport à la base 51. Le rebord 52 s'étend depuis la base 51 en direction de la paroi avant avec l'ouverture de visibilité.

Ce rebord 52 s'étend le long de trois côtés successifs de la base définissant ainsi un réceptacle primaire RP en forme de U, ledit réceptacle primaire RP s'étendant entre les bords intérieurs du rebord 52 et le côté 53 sans rebord. Le côté 53 est dit côté libre et correspond au bord dit libre de la cale. Le côté libre 53 est positionné au plus proche de l'ouverture latérale 74 de la cavité du boîtier, ce qui permet d'insérer l'appareil électronique portatif par l'ouverture latérale 74 dans le réceptacle définit par la cale primaire 5 lorsque celui-ci est introduit postérieurement à la cale d'adaptation 10.

En variante de l'invention le rebord 52 s'étend partiellement le long des trois côtés de la base 51. Dans une autre variante le rebord 52 s'étend sur la totalité des trois côtés de la base 51.

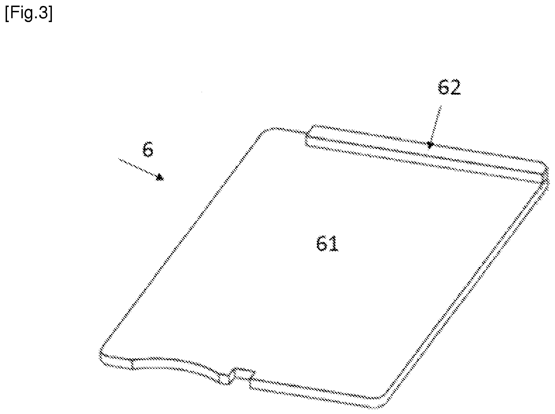

Une autre variante de cale primaire 6, représentée en figure 3, comprend une base en forme de plaque rectangulaire 61 et un rebord 62 s'étendant perpendiculairement à la base 61 sur le côté le plus éloigné de l'ouverture latérale 74 du boîtier lorsque la cale primaire 6 est en position inséré dans la cavité du boîtier 7. Le rebord 62 s'étend de puis la base 61 en direction de la paroi 71 avec l'ouverture de visibilité.

Selon l'invention, la cale d'adaptation comprend une cale intermédiaire 34 formant une plaque en forme de rectangle apte à reposer sur la base 51 de la cale primaire 5, et dont trois bords consécutifs sont au contact avec les trois bords intérieurs du rebord 52 de la cale primaire 5. Dans une autre variante la cale intermédiaire forme une plaque en forme de U apte à reposer sur la base 51 de la cale primaire 5 et avec les bords extérieurs du U au contact avec les trois bords intérieurs du rebord 52 de la cale primaire 5.

La cale intermédiaire 34 est formé par un assemblage de deux plaques 3 et 4. La plaque 3 est en forme de U. La plaque 4 est de forme rectangulaire et vient au contact de trois bords intérieurs du U formé par la plaque 3. La plaque 4 est détachable de la plaque 3 par une ligne prédécoupée frangible. Les plaques 3 et 4 sont de même épaisseur.

Selon l'invention la cale d'adaptation 10 comporte une cale secondaire 1 formant une plaque en forme de U, s'étendant sur la plaque 3 de la cale intermédiaire 34, au contact avec les trois bords intérieurs du rebord 52 de la cale primaire 5. Les branches opposées du U de la plaque 1 se reposent sur les branches opposées du U de la plaque 3, en ayant une branche opposée de même largeur et l'autre branche opposée de la plaque 1 de largeur inférieure à la largeur de la plaque 3. La branche de la base du U de la plaque 1 est de longueur inférieure à la longueur de la branche de la base du U de la plaque 3.

Selon l'invention la cale d'adaptation 10 comprend une cale tertiaire 2 formant une plaque en forme de L, et formant avec la plaque 1 une plaque de même épaisseur. La plaque 2 est détachable de la plaque 1 par une ligne prédécoupée frangible. En position assemblée les plaques 1 et 2 forment une plaque s'étendant sur la cale intermédiaire 34 constituée des plaques assemblées 3 et 4 ou sur la variante de cale intermédiaire constituée de la seule plaque 3. Les bords extérieurs de la cale tertiaire 2 en forme de L sont au contact de deux des bords intérieurs du U formé par la cale secondaire 1.

Les cales assemblées 1 et 2 constituent ainsi une cale en forme de U dont chacune des branches opposées est de même largueur que la branche des branches opposées du U de la plaque 3 sur laquelle elle repose.

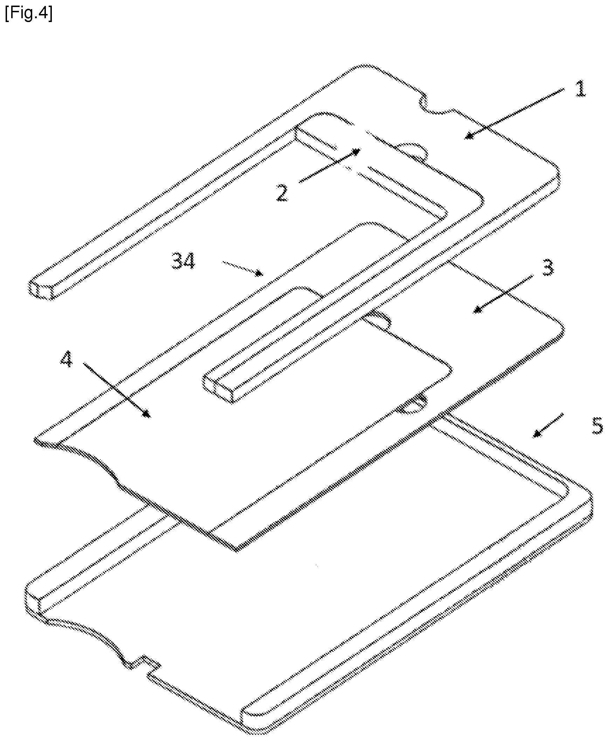

La figure 4 représente schématique une cale d'adaptation 10 selon l'invention. Cette cale d'adaptation comprend une cale primaire une cale secondaire 1, une cale tertiaire 2 et une cale intermédiaire 3,4.

La cale d'adaptation de par sa conception modulaire peut s'adapter à plusieurs dimensions d'appareils électroniques portatifs tant de largeurs, de longueurs ou d'épaisseurs de différents appareils électroniques portatifs.

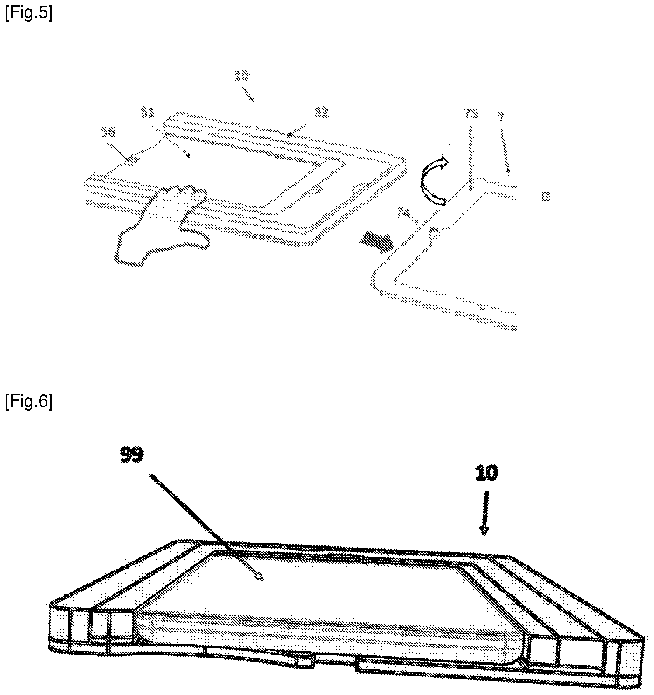

Dans une variante la combinaison, telle que représentée schématiquement en figure 6, des différentes cales primaire et secondaire et tertiaire et intermédiaires, est choisie de façon à ce que l'appareil électronique portatif 99 soit en affleurement par rapport à la cale d'adaptation, ce qui correspond à une épaisseur de l'appareil électronique portatif 99 égale à l'épaisseur interne du réceptacle créé par la cale d'adaptation 10.

Dans une variante de l'invention l'épaisseur externe de la cale d'adaptation 10, qui correspond à l'épaisseur de la base 51 additionnée à l'épaisseur interne du réceptacle, est égale à l'épaisseur de la cavité.

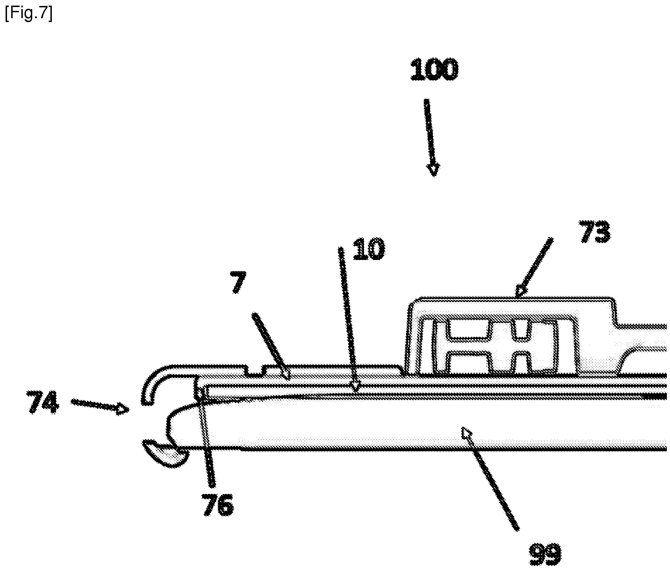

La figure 7 représente une section de l'ensemble de support 100 selon l'invention. Une butée 76 du boîtier coopère avec une découpe 56 dans la cale d'adaptation 10. Dans une variante de l'invention la découpe 56 est située au niveau du bord libre de la cale primaire 5 de la cale d'adaptation 10 du côté de l'ouverture latérale 74.

Chacune des plaques constituant les différentes cales est en matériau de type mousse. Ce choix de matériau mousse confère aux cales de la souplesse et la capacité d'absorber des vibrations voire des chocs. La souplesse du matériau de type mousse permet aussi de compenser d'éventuelles tolérances dimensionnelles de fabrication.

En variante le matériau utilisé pour fabriquer les cales peut être un plastique ou un élastomère.

Dans une variante, la mousse est une mousse à cellules fermées.

Dans une variante la mousse est en polyéthylène réticulé.

Une mousse à cellules fermée conserve ses propriétés mécaniques plus longtemps qu'une mousse à cellules ouvertes ou semi-ouvertes.

Dans une première variante la mousse est de couleur sombre, de préférence de couleur noire. Ainsi les cales ne sont pas visibles.

Dans mode de réalisation de l'invention la densité de la mousse la densité de la mousse est comprise entre 45 kg/m3 et 150 kg/m3.

La plaque 3 de cale intermédiaire est insérée dans la cale primaire 5 par coincement avec le rebord 52 de la cale primaire 5 et reposant sur la base 51 de la cale primaire 5. La plaque 3 est initialement assemblée avec la plaque 4. La plaque 34 peut aussi être insérée dans la cale primaire 5 par coincement avec le rebord 52, reposant sur la base 51 de la cale primaire 5.

Une fois détachée de la plaque 4, la plaque 3 peut aussi être insérée dans la cale primaire 5 par coincement avec le rebord 52, et reposant sur la base de la cale primaire 5, et étant au contact de la plaque 3.

La cale secondaire 1 est insérée, reposant sur la plaque 3, dans la cale primaire 5 tenant par coincement avec le rebord 52.

Le choix d'un matériau avec de la souplesse, de type mousse ou plastique ou élastomère confère aux différentes cales de la souplesse nécessaire pour une mise en place par coincement.

La figure 5 est une vue extérieure du boîtier du côté de l'ouverture latérale 74. Dans une variante de l'invention le boîtier comprend une ouverture latérale 74 sur un des bords latéraux du boîtier, donnant accès à la cavité. Une paroi de fermeture 75 vient obturer en position d'utilisation l'ouverture latérale 74. Ladite paroi 75 est de plus mobile de sorte à laisser libre l'accès à la cavité pour permettre l'insertion de la cale d'adaptation 10 et/ou de l'appareil électronique portatif 99. En position d'ouverture ladite paroi 75 peut pivoter et libérer l'accès à l'ouverture latérale 74 donnant accès à la cavité du boîtier.

Dans une première variante la paroi latérale 75 comprend, au niveau de son raccordement avec une paroi de la paroi avant proche de cette ouverture latérale 74, une ligne de flexibilité s'étendant sur la longueur le long de l'ouverture latérale 74. Cette ligne de flexibilité permet de faire pivoter la paroi 75 par rapport à cette ligne de flexibilité et ainsi de rendre accessible l'ouverture latérale 74 pour qu'une cale d'adaptation 10 et/ou un appareil électronique portatif 99 puissent être insérés dans la cavité du boîtier 7.

Dans une variante de l'invention, la paroi latérale 75 est munie d'un mécanisme avec un axe de pivotement et de moyens de rappel élastique pour refermer ladite ouverture latérale 74.

Dans une variante de l'invention le boîtier comprend une butée 76, et la cale d'adaptation comprend une découpe 56 apte à coopérer avec la butée 76 une fois la cale d'adaptation insérée dans la cavité, de façon à assurer le maintien de la cale d'adaptation au sein de la cavité, et à empêcher le glissement de la cale d'adaptation hors de la cavité

Dans une variante particulière de l'invention, la butée 76 consiste en un ergot s'étendant depuis la paroi arrière du boîtier vers l'intérieur du boîtier, et la découpe 56 consiste en une encoche réalisée au niveau du bord libre de la cale primaire 5. L'ergot en s'insérant dans l'encoche lors de l'insertion de la cale d'adaptation 10 dans la cavité du boîtier 7 bloque la cale d'adaptation et empêche un glissement par l'ouverture latérale 74. La figure 7 représente schématiquement la butée 76 du boîtier 7.

Dans une variante le boîtier 7 comprend en outre des orifices disposés sur les côtés latéraux, perpendiculaires aux paroi avant ou arrière, qui sont destinés au passage de connexions filaires d'alimentation électriques ou de signal.

Dans une variante de l'invention, l'ensemble de support 100 comprend en outre une coque souple destinée à envelopper le boîtier 7. La coque souple comprend des ouvertures correspondant aux orifices du boîtier pour des connexions filaires, pour la visibilité de l'écran, et pour l'interface de fixation 73. La coque souple comprend des parois souples et est fixée au boîtier 7 en enveloppant partiellement le boîtier 7, postérieurement à l'insertion de la cale d'adaptation 10 dans la cavité du boîtier 7, et postérieurement à l'insertion de l'appareil électronique portatif 99 dans la cavité du boîtier 7. La coque souple comprend en outre une paroi souple d'obturation 85 qui obture au moins partiellement l'ouverture latérale 74 du boîtier 7 et recouvre la paroi mobile 75, de sorte à empêcher des sorties, du boîtier 7, non souhaitées de la cale d'adaptation 10 et de l'appareil 99, notamment lors de choc ou de manipulation de l'ensemble de support 100.

Dans une variante de l'invention la coque souple est en élastomère., par exemple de type EPDM, ou en matériau pastique souple.

L'invention concerne aussi un véhicule comprenant un ensemble de support 100 selon l'invention.

Dans une variante de l'invention un véhicule de transport terrestre, ou ferroviaire, ou aérien, comprend un ensemble de support 100 selon l'invention et un moyen de fixation apte à coopérer avec l'interface de fixation 73 dudit boîtier 7 de l'ensemble de support 100.

Dans une autre variante de l'invention le véhicule est un véhicule automobile et comprend un ensemble de support 100 selon l'invention, et un moyen de fixation à une planche de bord apte à coopérer avec l'interface de fixation 3 dudit boîtier 7 de l'ensemble de support 100.

## Revendications

1. Ensemble de support (100) destiné à recevoir un appareil électronique portatif (99) avec un écran, ledit ensemble (100) comprenant un boîtier (7) comprenant une cavité, une paroi (71) avec une ouverture de visibilité, de sorte permettre à un utilisateur de voir l'écran, l'ensemble de support (100) comprenant **une cale d'adaptation** (10) amovible par rapport au boîtier (7), destinée à s'insérer au sein de la cavité, de sorte à définir un réceptacle à l'intérieur de la cavité, de volume inférieur à celui de la cavité, lorsque ladite cale d'adaptation (10) est insérée dans la cavité, la cale d'adaptation (10) comprenant
- **une cale primaire** (5) comportant une base (51) en forme de plaque rectangulaire ayant un rebord (52) ayant une épaisseur H par rapport à la base, s'étendant le long de trois des côtés de la base (51), ledit rebord formant ainsi trois rebords intérieurs orientés vers l'intérieur de la base (51),
- une cale intermédiaire (3,4) formant une plaque (3) en forme de U ou une plaque rectangulaire (4), agencée de sorte à s'étendre-sur la base (51) de la cale primaire (5) avec les bords extérieurs du U ou du rectangle de la cale intermédiaire (3, 34) au contact avec les trois bords intérieurs du rebord (52) de la cale primaire (5),
la cale d'adaptation (10) comportant en outre une cale secondaire (1) formant une plaque en forme de U, s'étendant sur la cale intermédiaire (3), au contact avec les trois bords intérieurs du rebord (52) de la cale primaire (5), **caractérisé en ce que** la cale d'adaptation comprend une cale tertiaire (2) formant une plaque en forme de L, s'étendant sur la cale primaire (5) ou sur la cale intermédiaire (4) et dont les bords extérieurs, situés du côté de l'angle obtus du L, sont au contact de deux des bords intérieurs du U formé par la cale secondaire (1).

2. Ensemble (100) de support selon la revendication 1 dans lequel le boîtier (7) comprend une ouverture latérale (74), sur un des bords latéraux du boîtier perpendiculaire à la paroi (71) comprenant l'ouverture de visibilité, donnant accès à la cavité, et une paroi (75) apte à obturer ladite ouverture latérale, ladite paroi étant mobile de sorte à laisser libre l'accès à la cavité.

3. Ensemble (100) de support selon l'une des revendications précédentes dans lequel le boîtier (7) comprend une butée (76), et dans lequel la cale (10) d'adaptation comprend une découpe (56) apte à coopérer avec la butée (76) de façon à empêcher le glissement de la cale d'adaptation hors de la cavité une fois la cale d'adaptation (10) insérée dans la cavité.

4. Ensemble de support (100) selon la revendication 1 dans lequel la cale secondaire (3), la cale tertiaire (2), la cale intermédiaire (3,4), la cale primaire (5) sont réalisés en matériau de type mousse.

5. Véhicule comprenant un ensemble de support (100) selon l'une des revendications précédentes, lequel ensemble (100) comprend une paroi opposée (72) à la paroi (71) avec l'ouverture de visibilité, ladite paroi opposée (72) comprenant une interface de fixation (73), le véhicule comprenant un moyen de fixation apte à coopérer avec l'interface de fixation (73) dudit ensemble (100).

6. Véhicule selon la revendication 5 comprenant un ensemble de support (100) selon l'une des revendications 1 à 4 et un moyen de fixation à une planche de bord apte à coopérer avec l'interface de fixation (73) dudit ensemble.

## Patentansprüche

1. Halterungsanordnung (100) zur Aufnahme eines tragbaren elektronischen Gerätes (99) mit einem Bildschirm, wobei die Anordnung (100) ein Gehäuse (7) mit einem Hohlraum, eine Wand (71) mit einer Sichtöffnung aufweist, sodass ein Benutzer den Bildschirm sehen kann, wobei die Halterungsanordnung (100) einen in Bezug auf das Gehäuse (7) abnehmbaren Adapterkeil (10) zum Einführen in den Hohlraum aufweist, um einen Behälter in dem Hohlraum zu definieren, der ein geringeres Volumen als der Hohlraum hat, wenn der Adapterkeil (10) Eingeführt in die Vertiefung, wobei der Adapterkeil (10)
- einen primären Keil (5) mit einer rechteckigen plattenförmigen Basis (51) mit einem Flansch (52) mit einer Dicke H in Bezug auf die Basis, der sich entlang drei der Seiten der Basis (51) erstreckt, wodurch der Flansch drei innere, nach innen gerichtete Flansche der Basis (51) bildet,
- eine Zwischenplatte (3, 4), die eine U-förmige Platte (3) oder eine rechteckige Platte (4) bildet, die so angeordnet ist, dass sie sich auf der Basis (51) der primären Platte (5) mit den äußeren Rändern des U oder des Rechtecks der Zwischenplatte (3, 34) in Kontakt mit den drei inneren Rändern des Randes (52) der primären Platte (5) erstreckt,
Anpasskeil (10), der ferner einen sekundären, eine U-förmige Platte bildenden Keil (1) aufweist, der sich über den Zwischenkeil (3) erstreckt und mit den drei inneren Rändern des Flansches (52) des primären Keils (5) in Berührung steht, **dadurch gekennzeichnet, dass** der Anpasskeil einen tertiären, eine L-förmige Platte bildenden Keil (2) aufweist, der sich über den primären Keil (5) oder den Zwischenkeil (4) erstreckt und dessen äußere Ränder, die auf der Seite des stumpfen Winkels des L angeordnet sind, mit zwei der inneren Ränder des U, das durch den sekundären Keil (1) gebildet ist, in Berührung stehen.

2. Halterungsanordnung (100) nach Anspruch 1, bei der das Gehäuse (7) eine Seitenöffnung (74) an einem der Seitenränder des Gehäuses senkrecht zu der Wand (71) aufweist, die die Sichtöffnung, die den Zugang zum Hohlraum ermöglicht, und eine Wand (75) aufweist, die die Seitenöffnung verschließen kann, wobei die Wand beweglich ist, um den Zugang zum Hohlraum frei zu lassen.

3. Halterungsanordnung (100) nach einem der vorhergehenden Ansprüche, bei der das Gehäuse (7) einen Anschlag (76) aufweist, und bei der der Adapterkeil (10) einen Ausschnitt (56) aufweist, der mit dem Anschlag (76) zusammenwirken kann, um ein Gleiten des Adapterkeils aus dem Hohlraum zu verhindern, wenn der Adapterkeil (10) in den Hohlraum eingesetzt ist.

4. Halterungsanordnung (100) nach Anspruch 1, wobei der sekundäre Keil (3), der tertiäre Keil (2), der mittlere Keil (3, 4) und der primäre Keil (5) aus einem schaumartigen Material hergestellt sind.

5. Fahrzeug mit einer Halterungsanordnung (100) nach einem der vorhergehenden Ansprüche, wobei die Anordnung (100) eine der Wand (71) gegenüberliegende Wand (72) mit der Sichtöffnung aufweist, wobei die gegenüberliegende Wand (72) eine Befestigungsschnittstelle (73) aufweist, wobei das Fahrzeug Befestigungsmittel aufweist, die mit der Befestigungsschnittstelle (73) der Anordnung (100) zusammenwirken können.

6. Fahrzeug nach Anspruch 5, dass eine Trägeranordnung (100) nach einem der Ansprüche 1 bis 4 und Befestigungsmittel an einem Armaturenbrett umfasst, die mit der Befestigungsschnittstelle (73) der Anordnung zusammenwirken können.

## Claims

1. A holder assembly (100) for receiving a portable electronic apparatus (99) with a display, the holder assembly (100) comprising a housing (7) comprising a cavity, a wall (71) with an aperture for viewing, so as to allow a user to see the display, the holder assembly (100) comprising a spacer (10) removable from the housing (7), for insertion within the cavity, so as to define a receptacle within the cavity, of a volume smaller than that of the cavity, when the holder (10) is inserted into the cavity, the adaptation wedge (10) comprising
- a primary shim (5) comprising a base (51) in the form of a rectangular plate having a rim (52) having a thickness H relative to the base, extending along three of the sides of the base (51), said rim thus forming three inner rims oriented towards the inside of the base (51),
- an intermediate wedge (3, 4) forming a U-shaped plate (3) or a rectangular plate (4), arranged so as to extend on the base (51) of the primary wedge (5) with the outer edges of the U or of the rectangle of the intermediate wedge (3, 34) in contact with the three inner edges of the rim (52) of the primary wedge (5),
the adaptation wedge (10) further comprising a secondary wedge (1) forming a U-shaped plate, extending over the intermediate wedge (3), in contact with the three inner edges of the rim (52) of the primary wedge (5), **characterized in that** the adaptation wedge comprises a tertiary wedge (2) forming an L-shaped plate, extending over the primary wedge (5) or over the intermediate wedge (4) and whose outer edges, located on the side of the obtuse angle of the L, are in contact with two of the inner edges of the U formed by the secondary wedge (1).

2. Support assembly (100) according to claim 1, in which the housing (7) comprises a lateral opening (74), on one of the lateral edges of the housing perpendicular to the wall (71) comprising the visibility opening, giving access to the cavity, and a wall (75) capable of closing off said lateral opening, said wall being movable so as to leave free access to the cavity.

3. Support assembly (100) according to one of the preceding claims, in which the housing (7) comprises an abutment (76), and in which the adaptation wedge (10) comprises a cut-out (56) capable of cooperating with the abutment (76) so as to prevent the adaptation wedge from sliding out of the cavity once the adaptation wedge (10) has been inserted into the cavity.

4. A support assembly (100) according to claim 1, in which the secondary shim (3), the tertiary shim (2), the intermediate shim (3, 4), and the primary shim (5) are made of foam-type material.

5. Vehicle comprising a support assembly (100) according to one of the preceding claims, which assembly (100) comprises a wall opposite (72) to the wall (71) with the visibility opening, said opposite wall (72) comprising a fixing interface (73), the vehicle comprising a fixing means able to cooperate with the fixing interface (73) of said assembly (100).

6. Vehicle according to claim 5 comprising a support assembly (100) according to one of claims 1 to 4 and a means of attachment to a dashboard capable of cooperating with the attachment interface (73) of said assembly.
